# EUROPEAN PATENT APPLICATION

(11) **EP 3 316 475 A1**
(43) Date of publication of application: **02.05.2018**
(21) Application number: 17198216.8
(22) Date of filing: 25.10.2017
(51) Int. Cl.: H02P 7/281, H02J 3/32, H02J 7/14

(54) **SUPPLY CIRCUIT AND METHOD OF SUPPLYING ELECTRIC POWER**

(30) Priority: 01.11.2016 EP 16196710
(71) Applicant: OCE Holding B.V., 5914 CA Venlo (NL)
(72) Inventor: PETERS, Wilhelmus H.G., 5914 CA Venlo (NL)
(74) Representative: OCE IP Department

(57) **Abstract**

The invention relates to a supply circuit arranged to be connected to a power supply, a rechargeable buffer for electric energy and to an electric motor, comprising
• a power line arranged to connect an output of the power supply to an input of a motor drive circuit wherein the motor drive circuit is arranged to lift the voltage supplied on the input using regenerated power of the motor in a regeneration mode of the supply circuit; and
• a control unit.

The control unit is arranged to measure the voltage on the power line using a sensor circuit.

The supply circuit comprises a buffer connection line to connect the power line to the rechargeable buffer comprising a controllable switching device (12) arranged to be controlled by the control unit, wherein the control unit is arranged to compare the measured voltage with a threshold voltage and to operate the controllable switching device in a conductive state upon concluding that the measured voltage is higher than the threshold voltage.

The power line comprises a connection for a further load arranged to be supplied by either the power supply or by the motor.

## Description

The invention relates to a supply circuit arranged to be connected to a power supply, a rechargeable buffer for electric energy and to an electric motor, comprising
- a power line arranged to connect an output of the power supply to an input of a motor drive circuit wherein the motor drive circuit is arranged to lift the voltage supplied on the input using regenerated power of the motor in a regeneration mode of the supply circuit; and
- a control unit.
The invention also relates to a method of supplying electric power using a supply circuit connected to a power supply, a rechargeable buffer for electric energy and to a motor drive circuit connected to a motor and comprising a power line for connecting an output of the power supply to an input of the motor drive circuit and a control unit.

US8288974B2 mentions the problem that the voltage varies significantly when an accumulator is connected directly to a power line, charged by regenerated energy and discharged, as it depends on the accumulated voltage. It also mentions that the current that can be drawn from an accumulator is limited.

In a first example the document discloses an AC-DC converter between the motor driver and the power supply. The AC-DC converter has a rectifying smoothing unit and then a first DC-DC converter. The first DC-DC converter supplies a power supply line. A motor driver is connected to the power supply line via a motor drive line which comprises a first diode such that the power supply line can supply the motor driver. The power supply line also supplies another load.
It also supplies a buffer connection line whereby the power supply line and the buffer connection line are separated by a second diode. The buffer connection line supplies a second DC-DC converter.
The regenerated power from the motor driver feeds the buffer connection line over a third diode.
The first, second and third diode form a rectification circuit and the cathodes of the second and third diode are connected together. This means that whichever of the motor driver and the DC-DC converter has the highest voltage supplies the second DC-DC converter.
Different braking types can be applied to the motor. There is regenerative braking, short braking and free-run braking. In free-run braking the power supply to the motor is simply turned off to let the motor cease to move. Short-braking means forming a closed circuit that only includes the motor to turn off the power supply to the motor and using the motor driver to counter electromotive force generated by the motor because of inertia and converting the energy corresponding to the electromotive force into heat to brake the motor. Hence, regenerated power is used to slow down the motor.
In regenerative mode, the regenerated voltage of the motor is returned to the motor drive line which thus becomes a voltage higher than the output voltage of the first DC-converter.

There is a smoothing capacitor connected to the buffer connection line, i.e. between the third diode (and second diode) and the second DC-DC converter. In addition, the second DC-DC converter comprises a capacitor (column 8 line 46). The second DC-DC converter supplies a control device for the motor driver.
The control device monitors the voltage output by the first DC-DC converter to the power supply line. In case the voltage drops below a threshold voltage after opening a switch between an external supply and the AC-DC converter, the motor will regenerate power and the voltage on the buffer connection line is maintained for a longer period of time than the voltage on the power supply line. This provides a time interval in which the regenerative power can be used to complete the saving of a hard disk drive and other operations.

In a second example, the diodes of the first example are replaced by MOSFETs. MOSFETs are transistors that reduce loss compared to the diodes.
The second example has the problem that that the voltage on the power supply line needs to be kept stable as it also supplies the other load and via the second DC-DC-converter a control unit controlling the state of the motor driver, whereby the second DC-DC converter also requires that the voltage remains within limits. The controller is used to do that by switching between states of driving the motor.
Regenerative braking is described for stopping the motor.
First the MOSFET between the power supply line (and hence the DC-DC power supply and the other load) and the buffer connection line (hence the DC-DC converter) is turned off (i.e. switched to non-conductive state) (mimicking the function of the second diode in reverse direction) to arrange that the voltage on the other load does not get too high via this route.

Then the MOSFET between the DC-DC power supply and the motor drive is turned off (switched to non-conductive state). This makes that the motor is stopped and at the same time (by the MOSFET mimicking the function of the diode in reverse direction) that the voltage on the power supply line does not get too high via this route. After that the MOSFET between the input of the motor drive and the DC-DC converter is opened which makes that the buffer can be charged with regenerated energy.
After turning off the MOSFETs between the power supply line and the buffer connection line and between the power supply line and the motor drive, the power supply line
supplies power to the other load only. Simultaneously, the regenerated power from the motor is used to charge a capacitor at the input stage of the DC-DC converter or (when transistor is in a conductive mode) to both charge a capacitor at the output stage of the DC-DC converter and to supply the control unit.
During the regenerative braking, the voltage of the regenerated power is maximally the voltage as earlier provided on the power supply line as during regenerative braking the motor driver and the motor drive line are decoupled from the power supply line and this is one of the differences between the second example and the first example.
The voltage on the line supplying the further other load (control device) is stabilized by the second DC-DC converter that comprises a circuit comprising a few elements including a switch with a varying duty cycle and the capacitor at the input and the capacitor at the output.
This means that the limits to use or store the regenerated capacity are low compared to the regenerated energy available for instance when stopping a heavy motor which means that a lot of the energy may have to be converted to heat.

It is an object of the invention to increase the energy efficiency of the supply circuit of the second example.

The object of the invention is reached by a supply circuit arranged to be connected to a power supply, a rechargeable buffer for electric energy and to an electric motor, comprising
- a power line arranged to connect an output of the power supply to an input of a motor drive circuit wherein the motor drive circuit is arranged to lift the voltage supplied on the input using regenerated power of the motor in a regeneration mode of the supply circuit; and
- **a control unit;**
characterized by
- the control unit being arranged to measure the voltage on the power line using a sensor circuit;
- a buffer connection line to connect the power line to the rechargeable buffer comprising a controllable switching device (12) arranged to be controlled by the control unit;
   wherein the control unit is arranged to compare the measured voltage with a threshold voltage and to operate the controllable switching device in a conductive state upon concluding that the measured voltage is higher than the threshold voltage;
- the power line comprising a connection for a further load arranged to be supplied by either the power supply or by the motor.

As the motor drive circuit is arranged to lift the voltage supplied on the input using regenerated power of the motor in a regeneration mode, the voltage on the input may increase above a threshold voltage. When in use the measured voltage indeed is higher than a threshold voltage, the controllable switching device is actively put in a conductive state and the rechargeable buffer is charged. This means that the regenerated energy is stored in the rechargeable buffer for later use.
This circuit is more efficient than the prior art because the supply circuit allows that the motor may not only be used to recharge the buffer with regenerated energy, but may also supply a further load.
Moreover, as the regenerated power may supply a further load if connected at the moment of regeneration, steps of charging and discharging a rechargeable buffer are avoided which is advantageous for efficiency.

The further load is not restricted to voltage levels as delivered by the power supply such as the control device in the prior art. In case both the further load is supplied and the buffer is recharged a larger current of regenerated energy can be efficiently handled by the supply circuit than if only the further load or the buffer is supplied by the regenerated energy.

In an embodiment the supply circuit comprises the power supply, wherein the power supply is arranged to supply a nominal supply output voltage and wherein the threshold voltage is higher than the nominal supply output voltage.

As the threshold voltage is higher than the supply output voltage, the buffer can store more energy in case in use the buffer comprises a capacitor.
This is because the storage capacity of a capacitor increases with the square value of the voltage.

In a further embodiment, the supply circuit of the earlier embodiments is provided, wherein the threshold voltage is adjustable.

The additional advantage of the circuit of this embodiment over the first example described in the prior art is that it is more flexible. This is because the diodes of the first example in the prior art will block the flow of energy at a fixed voltage which may differ from the maximum input voltage of the other load or from the maximum voltage at the output of the power supply.
As the threshold voltage is adjustable, it can be set to the maximum input voltage of the further load or the maximum voltage at the output of the power supply.

In an advantageous embodiment, the supply circuit is provided according to any of the previous embodiments wherein the buffer connection line comprises a boost converter.

Because the buffer connection line comprises a boost converter, in use the voltage supplied to a capacitor comprised in the rechargeable buffer is increased with respect to the voltage on the buffer connection line. This increases the storage capacity as the capacity of a capacitor increases with the squared voltage. Therefore, the supply circuit is advantageous in case used with a buffer comprising a capacitor because of increased efficiency.

In an advantageous embodiment, the supply circuit according to the previous embodiment comprises
- a buffer discharge line for connecting the buffer to the power line;
- the buffer discharge line comprises a further controllable switching device (14) arranged to be controlled by the control unit;
- the control unit comprising a further sensor circuit arranged to sense the output voltage of the buffer;
wherein the control unit is arranged to operate the further controllable switching device in a open state in case the output voltage of the buffer is below a minimum value.

By providing a buffer discharge line, the buffer can discharge without having the power flow in reverse direction through the boost converter. This minimises energy loss and thus improves efficiency.
In open state herein means that the switching device is in a non-conducting state.
As the further controllable switching device is in an open state in case the output voltage is below a minimum value, the output voltage is kept at or above that minimum value. Batteries are best kept charged with a minimum voltage. Therefore the supply circuit of this embodiment is advantageous for use in combination with a buffer that comprises a battery or a capacitor and thus is for multi-purpose use.

In an embodiment, the further controllable switching device being arranged to be controlled by the control unit means that the further controllable switching device comprises a further gate connected to a further control line connected to a further control output of the control unit.

In an advantageous embodiment, the supply circuit according to any of the previous embodiments is provided, comprising
- a buffer discharge line for connecting the buffer to the power line, the buffer discharge line comprising a further controllable switching device (F2) arranged to be controlled by the control unit;
- the control unit comprising a pulse width modulator arranged to keep the voltage on the power line above a minimum voltage and below a maximum voltage.

According to an aspect of the invention, there is provided a method of supplying electric power using a supply circuit connected to a power supply, a rechargeable buffer for electric energy and to a motor drive circuit connected to a motor and comprising a power line for connecting an output of the power supply to an input of the motor drive circuit and a control unit characterized by the steps of:
- lifting the voltage supplied in the input of the motor drive circuit using regenerated power of the motor in a regeneration mode of the supply circuit;
- using a sensor circuit of the control unit to measure the voltage on the power line;
- using the control unit to compare the measured voltage with a threshold voltage;
- controlling the state of a controllable switching device in a buffer connection line to connect the power line to the rechargeable buffer upon concluding that the measured voltage is higher than the threshold voltage;
- supplying generated power from the motor drive circuit to a further load connected to the power line.

As the voltage supplied on the input is lifted using regenerated power of the motor in a regeneration mode of the supply circuit, the voltage on the input may increase above a threshold voltage. When in use the measured voltage indeed is higher than a threshold voltage, the controllable switching device is actively put in a conductive state and the rechargeable buffer is charged. This means that the regenerated energy is stored in the rechargeable buffer for later use.
This method is more efficient than the prior art because the method allows that the motor may not only be used to recharge the buffer with regenerated energy, but may also supply a further load.
Moreover, as the regenerated power may supply a further load if connected at the moment of regeneration, steps of charging and discharging a rechargeable buffer are avoided which is advantageous for efficiency.

The method does not restrict the further load to voltage levels as delivered by the power supply such as the method using a control device in the prior art. In case both the further load is supplied and the buffer is recharged, a larger current of regenerated energy can be efficiently handled by the supply circuit according to the method than if only the further load or the buffer is supplied by the regenerated energy.

In an advantageous embodiment, the method according to the previous embodiment is provided, comprising supplying power to the motor drive circuit using a power supply arranged to supply a nominal supply output voltage lower than the threshold voltage.

As the nominal supply output voltage is lower than the threshold voltage, the buffer can store more energy in case in use the buffer comprises a capacitor. This is because the storage capacity of a capacitor increases with the square value of the voltage.

In an advantageous embodiment, the method according to the previous embodiment is provided, comprising adjusting the threshold voltage to correspond with a maximum input voltage of the further load or a maximum voltage at the output of a power supply.

By adjusting the threshold voltage the maximum amount of generated power is allowed to supply the further load without damaging the power supply or the further load.

In an advantageous embodiment, the method according to the previous embodiment is provided, comprising boosting the voltage in the buffer connection line using a boost converter.

Because the buffer connection line comprises a boost converter, the voltage supplied to a capacitor comprised in the rechargeable buffer is increased with respect to the voltage on the buffer connection line. This increases the storage capacity as the capacity of a capacitor increases with the squared voltage. Therefore, the method is advantageous in case used with a buffer comprising a capacitor because of increased efficiency.

In an advantageous embodiment, the method according to the previous embodiment is provided, wherein the supply circuit comprises
- a buffer discharge line for connecting the buffer to the power line;
- the buffer discharge line comprises a further controllable switching device arranged to be controlled by the control unit;
- the control unit comprising a further sensor circuit arranged to sense the output voltage of the buffer;
and comprising the step of using the control unit for operating the further controllable switching device in an open state in case the output voltage of the buffer is below a minimum value.

By providing a buffer discharge line, the buffer can discharge without having the power flow in reverse direction through the boost converter. This minimises energy loss and thus improves efficiency.
In open state herein means that the switching device is in a non-conducting state.
As the further controllable switching device is in an open state in case the output voltage is below a minimum value, the output voltage is kept at or above that minimum value. Batteries are best kept charged with a minimum voltage. Therefore, the method of this embodiment is advantageous for use in combination with a buffer that comprises a battery arranged to be connected to the buffer connection line.

In an advantageous embodiment, the method is provided, wherein the supply circuit comprises
- a buffer discharge line for connecting the buffer to the power line, the buffer discharge line comprising a further controllable switching device arranged to be controlled by the control unit;
and the method comprises the step of arranging to keep the voltage on the power line above a minimum voltage and below a maximum voltage using a pulse width modulator of the control unit.

Examples embodying the invention will now be described in conjunction with drawings, wherein:
Fig. 1 Circuit comprising a supply circuit according to a first example of the invention
Fig. 2 Circuit comprising a supply circuit according to a first example of the invention
Fig. 3 Circuit comprising a supply circuit according to a first example of the invention
Fig. 4 Circuit comprising a supply circuit according to a first example of the invention

### Example 1

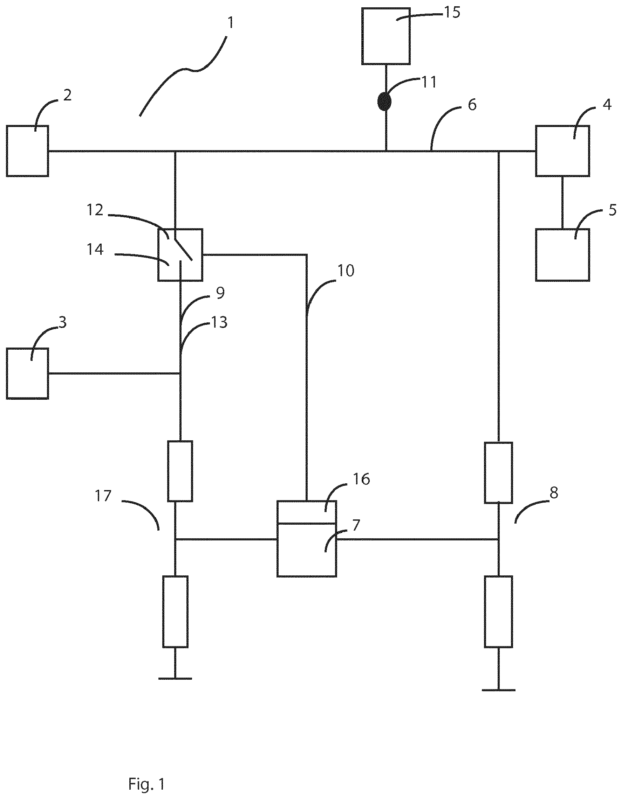

In a first example (Fig 1.) of the invention a supply circuit (1) is connected to a power supply (2) arranged to deliver a nominal voltage of 24V and to a rechargeable buffer (3), herein also called buffer (3). The supply circuit comprises a motor drive circuit (4). The motor drive circuit (4) is connected to a DC-motor (5), herein further referred to as motor (5).

The supply circuit (1) comprises a power line (6) between an output of the power supply (2) and an input of the motor drive circuit (4). The supply circuit (1) also comprises a control unit (7) which in turn comprises a sensor (8). The sensor (8) is arranged to measure the voltage in the power line (6).
The supply circuit (1) comprises a buffer connection line (9) comprising a controllable switching device (12), in the example a MOSFET. The controllable switching device (12) is controlled by the control unit (7) via a control line (10). The buffer connection line (9) connects the power line (6) with the rechargeable buffer (3) in case the controllable switching device (12) is in a conductive state.

The power line (6) comprises a connection (11) for a further load. A further load (15) is connected to the connection (11) for a further load. The further load (15) in this example is formed by an electrical heating unit.

The buffer (3) is a battery.
A threshold voltage of 26 V is stored in a non-volatile memory of the contol unit (7), in this case a ROM-memory. The threshold voltage can be changed by storing another value in the non-volatile memory.
The control unit (7) comprises a further sensor circuit (17) connected to an output of the rechargeable buffer. The further sensor circuit (17) is used by the control unit (7) to monitor the output voltage of the buffer (3).
The non-volatile memory also stores a minimum buffer voltage for the buffer (3).

### Braking

The supply circuit (1) can in use be operated in a regeneration mode. In this mode of the supply circuit (1) the motor brakes. In addition the motor drive circuit (4) is switched such that the electromotive force is converted in electric power with a regenerated voltage that is added to the voltage that is supplied to the motor drive circuit (4). This is accomplished by supplying the motor from the power line through an upper part of a first half bridge and feeding that current after passing through the motor to a second half bridge.
The control unit (7) uses a sensor (8) to measure the voltage on the power line. The control unit (7) compares the voltage on the power line with a threshold voltage which in this example is 26V. When the control unit (7) concludes, based on the comparison, that the voltage on the power line is higher than a threshold voltage, the control unit (7) uses the control line (10) to operate the controllable switching device (9) in a conductive state. The controllable switching device being in a conductive state causes that the rechargeable buffer (3) is connected to the input of the motor drive circuit (4) and that the rechargeable buffer (3) is charged.
The motor (5) does not only supply power to the rechargeable buffer (3) but also to the further load (15) via the connection (11) for a further load.
As the regenerated power is used to charge the rechargeable buffer (3) and to supply the further load (15), the power supply (2) is only exposed to a fraction of the energy released by the electromotive force in the braking motor and still that energy is efficiently used.

In the example there is no switch to protect the power supply (2) from the exposure of the energy released by the electromotive force.

The regenerated voltage is linearly dependent on the frequency of the revolutions of the motor. As the motor brakes, the frequency of the revolutions decreases and the regenerated voltage decreases. Therefore, after a period of braking, the voltage on the power line (6) decreases to a level below the threshold voltage of 26 V, for instance 25V The comparison in that situation leads to the conclusion that the measured voltage is not higher than the threshold voltage. The controllable switching device (12) is now operated by the control unit (7) using the control line (10) to be in a non-conductive state. As a consequence the rechargeable buffer (3) is no longer connected to the power line (6) and the rechargeable buffer (3) is no longer being charged.
The further load (15) however is still supplied by the power line (6) than thus by the regenerated voltage of the motor (5).
Once the motor comes to a complete stand still, the regenerated voltage is 0 V. The voltage on the power line (6) is the nominal voltage as delivered by the power supply (2). The further load (15) is only supplied by the power supply (2).

### Accelerating

The control unit (7) comprises a pulse width modulator (16). The control unit (7) is arranged to switch a further controllable switching device (14) in the buffer connection line. The buffer connection line (9) also forms a buffer discharge line (13) and the further controllable switching device (14) actually is formed by the controllable switching device (12).
When the motor (5) accelerates, the current drawn from the power supply (2) may become so high, that the voltage on the power line (6) drops.
The ROM-memory of the control unit (7) also stores a minimum power supply voltage and a maximum power supply voltage. The minimum power supply voltage is 23 V and the maximum power supply voltage is 25 V.
The control unit (7) in response to the voltage on the power line (6) dropping below the minimum power supply voltage operates the further controllable switching device (14) via the control line (10). The further controllable switching device (14) is operated by the pulse width modulator (16) of the control unit (7) to keep the voltage between the minimum power supply voltage and the maximum power supply voltage.

### Constant speed

The power supply (2) supplies the motor drive circuit (4) with the nominal voltage.
In a first situation, the controllable switching device (12) is operated by the control unit (7) in non-conductive mode.
In a second situation, the control unit (7) detects that the output voltage of the rechargeable buffer (3) is below the minimum buffer voltage for the buffer (3). In reaction the control unit (7) operates the controllable switching device (12) via the control line (10) to be in conductive state. As a consequence, the power supply (2) supplies both the motor (5) via the motor drive circuit (4) and the rechargeable buffer (3). This is done to maintain a minimum voltage in the battery which is advantageous for the condition of the battery (3) and is advantageous in case the buffer (3) needs to be used to keep the voltage on the power line (6) between the minimum and maximum power supply voltage.

### Example 2

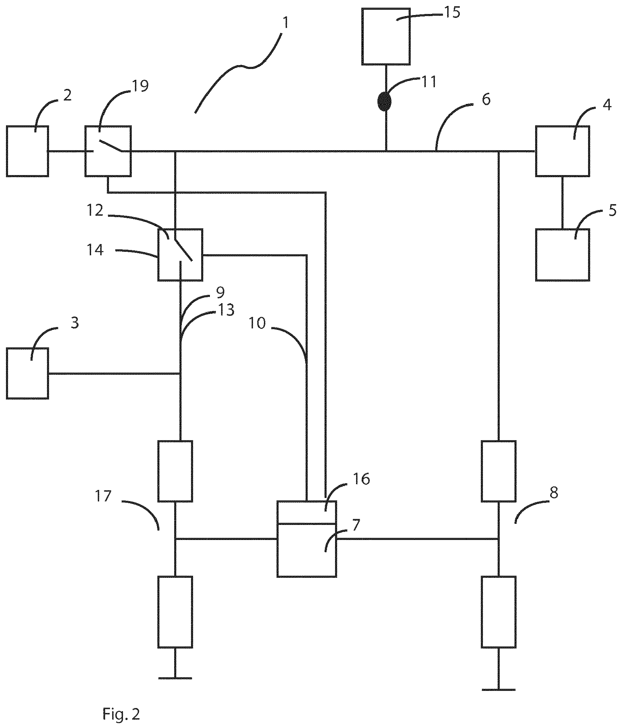

In a second example (Fig. 2) the supply circuit (1) differs from supply circuit in the first example in that the power line (6) comprises an additional controllable switch (19). The additional controllable switch (19) is positioned between the power supply (2) and the positions where the buffer connection line (9) is connected to the power line (6).
The use of the supply circuit (1) differs only from the use examples described in relation to example 1 in that the additional switch is opened, i.e. operated in a non-conductive state in case the rechargeable buffer (3), i.e. the battery, is charged in the regeneration mode.

### Example 3

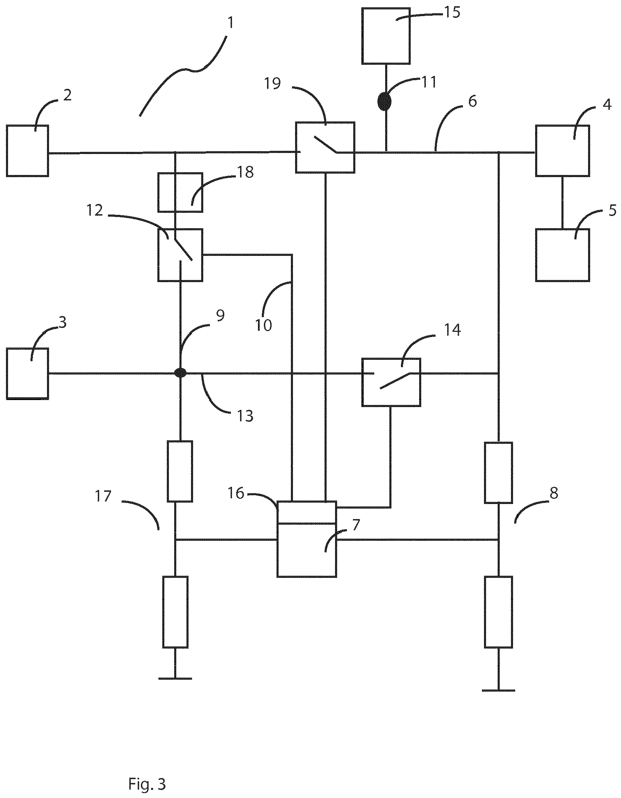

In a third example (Fig. 3) the supply circuit (1) differs from the supply circuit in the first example in that the buffer connection line (9) and the buffer discharge line (13) are separated. An additional difference in the example is that the rechargeable buffer (3) comprises a capacitor instead of a battery. Moreover, the buffer connection line (9) comprises a boost converter (18). Finally, an additional controllable switch (19) is positioned between the buffer connection line (9) and the motor drive circuit (4).
The capacitor is charged via the buffer connection line (9) where the voltage on the power line is boosted by the boost converter (18). The voltage is boosted as the capacity of the capacitor increases with the voltage. During charging the capacitor, the additional controllable switch (19) and the controllable switching device (12) are operated in a conductive state and the further controllable switching device (14) is operated in a non-conductive state.

### Example 4

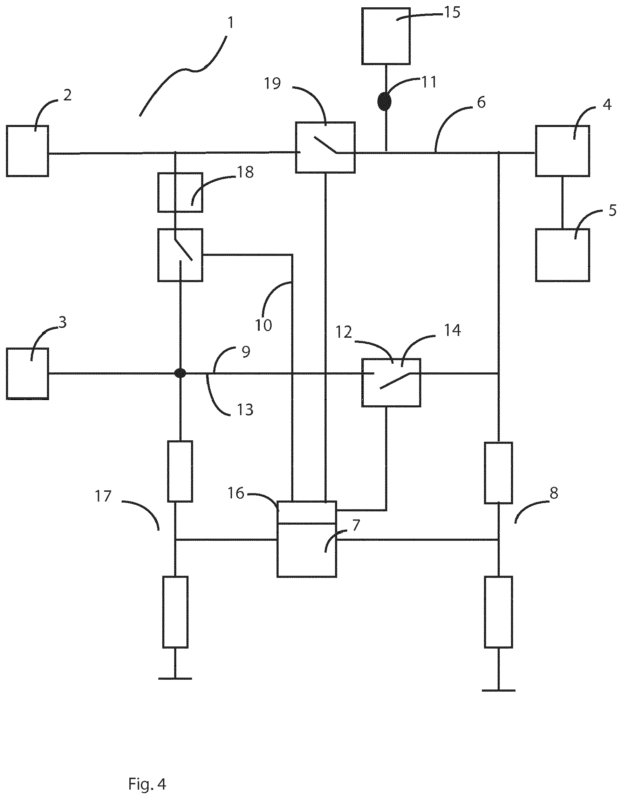

A forth example (Fig. 4) differs from the third example for instance in that the rechargeable buffer (3) comprises a battery instead of a capacitor. The buffer connection line (9) also forms the buffer discharge line (13) as described for the first and second example. The controllable switching device (12) also forms the further controllable switching device (14). The additional controllable switch (19) is used to disconnect the line including the boost converter and the power supply from the motor drive circuit (4) and the connection (11) in case the rechargeable buffer (3) is charged.

## Claims

1. Supply circuit arranged to be connected to a power supply, a rechargeable buffer for electric energy and to an electric motor, comprising
• a power line arranged to connect an output of the power supply to an input of a motor drive circuit wherein the motor drive circuit is arranged to lift the voltage supplied on the input using regenerated power of the motor in a regeneration mode of the supply circuit; and
• a control unit;
**characterized by**
• the control unit being arranged to measure the voltage on the power line using a sensor circuit;
• a buffer connection line to connect the power line to the rechargeable buffer comprising a controllable switching device (12) arranged to be controlled by the control unit;
wherein the control unit is arranged to compare the measured voltage with a threshold voltage and to operate the controllable switching device in a conductive state upon concluding that the measured voltage is higher than the threshold voltage;
• the power line comprising a connection for a further load arranged to be supplied by either the power supply or by the motor.

2. Supply circuit according to claim 1, comprising
• the power supply, wherein the power supply is arranged to supply a nominal supply output voltage and wherein the threshold voltage is higher than the nominal supply output voltage.

3. Supply circuit according to claim 1 or 2, wherein the threshold voltage is adjustable.

4. Supply circuit according to any of the previous claims wherein the buffer connection line comprises a boost converter.

5. Supply circuit according to claim 4, comprising
• a buffer discharge line for connecting the buffer to the power line;
• the buffer discharge line comprises a further controllable switching device (14) arranged to be controlled by the control unit;
• the control unit comprising a further sensor circuit arranged to sense the output voltage of the buffer;
wherein the control unit is arranged to operate the further controllable switching device in a open state in case the output voltage of the buffer is below a minimum value.

6. Supply circuit according to any of the claims 1 to 5, comprising
- a buffer discharge line for connecting the buffer to the power line, the buffer discharge line comprising a further controllable switching device (F2) arranged to be controlled by the control unit;
- the control unit comprising a pulse width modulator arranged to keep the voltage on the power line above a minimum voltage and below a maximum voltage.

7. Method of supplying electric power using a supply circuit connected to a power supply, a rechargeable buffer for electric energy and to a motor drive circuit connected to a motor and comprising a power line for connecting an output of the power supply to an input of the motor drive circuit and a control unit,
**characterized by** the steps of:
• lifting the voltage supplied in the input of the motor drive circuit using regenerated power of the motor in a regeneration mode of the supply circuit;
• using a sensor circuit of the control unit to measure the voltage on the power line;
• using the control unit to compare the measured voltage with a threshold voltage;
• controlling the state of a controllable switching device in a buffer connection line to connect the power line to the rechargeable buffer upon concluding that the measured voltage is higher than the threshold voltage;
• supplying regenerated power from the motor drive circuit to a further load connected to the power line.

8. Method according to claim 7, comprising supplying power to the motor drive circuit using a power supply arranged to supply a nominal supply output voltage lower than the threshold voltage.

9. Method according to claim 8, comprising adjusting the threshold voltage to correspond with a maximum input voltage of the further load or a maximum voltage at the output of a power supply.

10. Method according to claim 7,8 or 9, comprising boosting the voltage in the buffer connection line using a boost converter.

11. Method according to claim 10, wherein the supply circuit comprises
• a buffer discharge line for connecting the buffer to the power line;
• the buffer discharge line comprises a further controllable switching device arranged to be controlled by the control unit;
• the control unit comprising a further sensor circuit arranged to sense the output voltage of the buffer;
and comprising the step of using the control unit for operating the further controllable switching device in an open state in case the output voltage of the buffer is below a minimum value.

12. Method according to claim 11, wherein the control unit comprises a pulse width modulator, the method comprising
- controlling a further controllable switching device comprised in a buffer discharge line for connecting the buffer to the power line;
- using pulse width modulation for keeping the voltage on the power line above a minimum voltage and below a maximum voltage.
